# EUROPEAN PATENT SPECIFICATION

(11) **EP 2 096 694 B1**
(45) Date of publication and mention of the grant of the patent: **13.04.2011**
(21) Application number: 09153709.2
(22) Date of filing: 26.02.2009
(51) Int. Cl.: H01M 4/64, H01M 4/24

(54) **Flat alkaline primary battery**
Flache alkalische Primärbatterie
Pile alcaline primaire plate

(30) Priority: 29.02.2008 JP 2008051124
(43) Date of publication of application: 02.09.2009
(73) Proprietor: Seiko Instruments Inc., Chiba-shi, Chiba (JP)
(72) Inventor: Yamaguchi, Norishige, Chiba-shi, Chiba (JP)
(74) Representative: Cloughley, Peter Andrew

(56) References cited:
- WO-A-2005/112148
- US-A1- 2003 054 246
- US-A1- 2007 048 575

## Description

The present invention relates to a flat alkaline primary battery.

In coin-shaped, button-shaped, or other-shaped flat alkaline primary batteries used for small electronics such as electronic wrist watches, portable electronic calculators, etc., a positive electrode can accommodates a positive electrode mixture where manganese dioxide is used as a positive electrode active material, and a negative electrode can contains a negative electrode mixture where zinc or zinc alloy powder is used as a negative electrode active material.

The positive electrode mixture and the negative electrode mixture face each other with a separator in between, and an alkaline electrolyte is injected inside the battery. A positive electrode mixture is obtained by mixing manganese dioxide, graphite powder as an electric conductor, and, when binding properties of the positive electrode mixture are insufficient, a resin powder or emulsion of polytetrafluoroethylene (PTFE), etc., as a binder. The mixture is then molded into a pellet and used as a positive electrode.

Flat alkaline primary batteries using silver oxide as the positive electrode active material, so-called silver oxide batteries, are widely available in the general market. As compared with manganese dioxide, silver oxide has a high volume energy density, and the battery voltage when the negative electrode active material is zinc is constant around 1.56 volts. Therefore, such silver oxide is mainly used as a power supply for small electronics such as electronic wrist watches, portable electronic calculators, etc., in which the final voltage is not lower than 1.2 volts.

Silver oxide provides excellent performance, but is expensive because silver, which is a precious metal, is the main component, and the price thereof fluctuates depending on the silver market price. Accordingly, considering the reduction and stabilization of the manufacturing cost, silver oxide is difficult to use. Therefore, as well as silver oxide batteries, a great number of so-called alkaline manganese batteries using manganese dioxide as a positive electrode active material are currently on the general market, whose price per mass is much less expensive, approximately one two-hundredth, than silver oxide, although its volume energy density is lower and the voltage drop during discharge is greater compared with silver oxide. Accordingly, addition of various additives into manganese dioxide or the like inexpensive active materials has been studied.

Flat alkaline primary batteries using a material such as manganese dioxide as a positive electrode active material have a problem where the voltage drops greatly during discharge. In devices such as electronic wrist watches where the final voltage is set relatively high to suit the battery voltage of silver oxide batteries, the voltage drop of manganese dioxide during discharge leads to a problem of extremely shortened operating time of the device. Although various studies have been conducted on the prevention of voltage drop, satisfactory results have not been obtained.

To solve this problem, a battery using nickel oxyhydroxide as a positive electrode active material has been proposed. The battery voltage of this battery is higher than that of a silver oxide battery, but the theoretical electric capacity per unit mass of nickel oxyhydroxide is 292 mAh/g, lower than 308 mAh/g (per valence of manganese) of manganese dioxide. Accordingly, it has been difficult for a battery using nickel oxyhydroxide as a positive electrode substance to have an improved capacity higher than that of a battery using manganese dioxide as a positive electrode active material.

Further, when a battery using a cellulose thickener as an active material stabilizer of a negative electrode mixture is stored at high temperatures, stabilizers in the negative electrode mixture decompose due to the oxidation effect of nickel oxyhydroxide of the positive electrode, causing a lack of electrolyte around the zinc or zinc alloy powder, a negative electrode active material. It has been revealed that this causes a problem in that zinc is passivated accordingly, which results in a significant reduction in the capacity.

US 2007/048575 discloses a metal-air electrochemical cell that includes spun mercury-amalgamated zinc powder particles.

The invention is aimed to solve the above problems. An object of the invention is to provide a flat alkaline primary battery that is inexpensive and has excellent battery capacity and capacity retention.

According to an aspect of the present invention, there is provided a flat alkaline primary battery as defined in claim 1.

According to the flat alkaline primary battery of the invention, because of the use of a highly cross-linked polyacrylic acid, even if the battery is stored at high temperatures, decomposition of stabilizers in the negative electrode mixture due to the oxidation effect of nickel oxyhydroxide of the positive electrode is prevented, thereby inhibiting passivation of zinc or zinc alloy powder, which is a negative electrode active material. Further, because of the use of a non-cross-linked polyacrylic acid and carboxymethylcellulose, the oxidation resistance of negative electrode active material stabilizers can be improved, and also the viscoelasticity of the negative electrode mixture can be optimized. As a result, a battery having excellent capacity retention can be obtained, in which the negative electrode mixture has excellent handleability.

In the flat alkaline primary battery, the highly cross-linked polyacrylic acid may be present as an active material stabilizer in the negative electrode mixture in a proportion of 0.05% or more and 3% or less.

According to this flat alkaline primary battery, the oxidation resistance of negative electrode active material stabilizers is improved, and thus a battery having excellent capacity retention can be obtained.

In the flat alkaline primary battery, the non-cross-linked polyacrylic acid may be present as an active material stabilizer in the negative electrode mixture in a proportion of 0.05% or more and 1% or less.

According to this flat alkaline primary battery, due to the higher flowability of non-cross-linked polyacrylic acids than cross-linked polyacrylic acids, the non-cross-linked polyacrylic acid inhibits passivation of zinc or zinc alloy powder more effectively than a highly cross-linked polyacrylic acid, and thus a battery having excellent capacity retention can be obtained.

In the flat alkaline primary battery, the carboxymethylcellulose may be present as an active material stabilizer in the negative electrode mixture in a proportion of 0.5% or more and 3% or less.

According to this flat alkaline primary battery, because carboxymethylcellulose, which has thickening characteristics superior to polyacrylic acids, is used as a kind of stabilizer in a negative electrode active material, the viscoelasticity of the negative electrode mixture can be optimized, and thus a battery having excellent handleability of the negative electrode mixture can be obtained.

Embodiments of the present invention will now be described by way of further example only and with reference to the accompanying drawings, in which:
Fig. 1 is a sectional view of a button-shaped alkaline battery according to the invention.
Fig. 2 is a table showing the leakage resistance of alkaline batteries according to the invention.

Hereinafter, one specific embodiment of the invention is described with reference to the drawings.

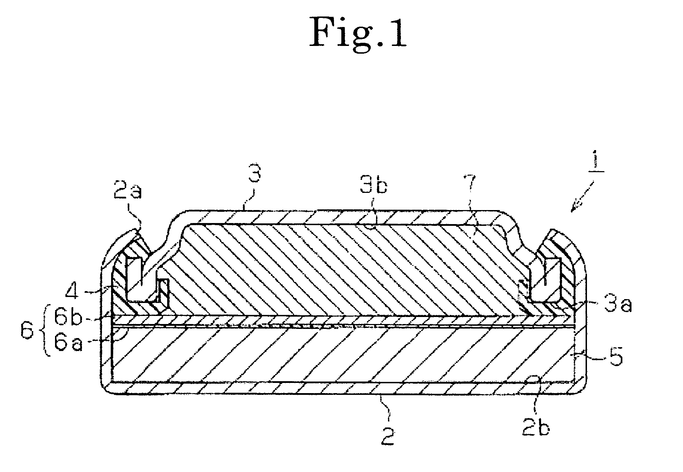

Fig. 1 shows a schematic sectional view of a button-shaped (flat) alkaline primary battery. In Fig. 1, an alkaline primary battery 1 is a button-shaped primary battery, and has a bottomed cylindrical positive electrode can 2 and a covered cylindrical negative electrode can 3. The positive electrode can 2 comprises stainless steel (SUS) plated with nickel, and serves also as a positive terminal. The negative electrode can 3 is formed from a three-layer clad material pressed into a cup-like shape, comprising an outer surface layer of nickel, a metal layer of stainless steel (SUS), and a collector layer of copper. The negative electrode can 3 is folded at its circular opening 3a, and the folded opening 3a is equipped with, for example, a ring-shaped gasket 4 made of nylon.

The negative electrode can 3 is fitted, from its opening 3a side equipped with the gasket 4, into a circular opening 2a of the positive electrode can 2. The opening 2a of the positive electrode can 2 is caulked against the gasket 4 and thus sealed, whereby the positive electrode can 2 and the negative electrode can 3 are coupled and fixed. The fixed coupling between the positive electrode can 2 and the negative electrode can 3 creates an enclosed space between the positive electrode can 2 and the negative electrode can 3 via the gasket 4.

The enclosed space accommodates a positive electrode mixture 5, a separator 6, and a negative electrode mixture 7. With the separator 6 in between, the positive electrode mixture 5 is placed on the positive electrode can 2 side, and the negative electrode mixture 7 is placed on the negative electrode can 3 side.

More specifically, the positive electrode mixture 5 is placed on the bottom 2b of the positive electrode can 2. The positive electrode mixture 5 is obtained by mixing a nickel oxyhydroxide powder as a positive electrode active material, graphite as an electric conductor, sodium polyacrylate as a binder, and alkaline electrolyte as an electrolyte, and then press-molding the mixture into a cylindrical pellet using a tableting machine.

The negative electrode mixture 7 is disposed on the upper side of the separator 6. The negative electrode mixture 7 is in the gel state, and comprises zinc or zinc alloy powder as a negative electrode active material, a highly cross-linked polyacrylic acid, a non-cross-linked polyacrylic acid, and carboxymethylcellulose as active material stabilizers, an alkaline electrolyte as an electrolyte, etc. The negative electrode mixture 7 is crimped on the bottom 3b of the negative electrode can 3, and accommodated on the upper side of the separator 6.

When the negative electrode mixture 7 uses a highly cross-linked polyacrylic acid as an active material stabilizer, even if the battery 1 is stored at high temperatures, decomposition of stabilizers in the negative electrode mixture 7 due to the oxidation effect of nickel oxyhydroxide of the positive electrode is prevented, and the electrolyte is retained around the zinc or zinc alloy powder, which is a negative electrode active material, thereby inhibiting passivation of zinc. Accordingly, a battery having excellent capacity retention can be obtained.

Further, when the negative electrode mixture 7 uses a non-cross-linked polyacrylic acid as an active material stabilizer, due to the higher flowability of non-cross-linked polyacrylic acids than cross-linked polyacrylic acids, the non-cross-linked polyacrylic acid retains the electrolyte around the zinc or zinc alloy powder more effectively than a highly cross-linked polyacrylic acid, thereby inhibiting passivation of zinc. Accordingly, a battery having excellent capacity retention can be obtained.

Further, when the negative electrode mixture 7 uses carboxymethylcellulose as an active material stabilizer, carboxymethylcellulose, which has thickening characteristics superior to polyacrylic acids, optimizes the viscoelasticity of the negative electrode mixture 7, and a battery having excellent handleability of the negative electrode mixture 7 can be obtained.

The highly cross-linked polyacrylic acid is preferably present as an active material stabilizer in the negative electrode mixture 7 in a proportion of 0.05% or more and 3% or less.

This is because when the proportion of the highly cross-linked polyacrylic acid in the negative electrode mixture 7 is less than 0.05%, the resulting oxidation resistance of active material stabilizers of the negative electrode mixture 7 is so low that passivation of zinc is insufficiently inhibited, which significantly reduces the capacity retention of the battery 1. Further, such a proportion also results in an excessive amount of isolated electrolytes in the negative electrode mixture 7, thereby reducing leakage resistance. When the proportion of the highly cross-linked polyacrylic acid in the negative electrode mixture 7 is more than 3%, the amount of negative electrode active material or electrolyte has to be reduced in accordance with the increase in the proportion, which leads to reduced capacity and degraded electric discharge characteristics.

The non-cross-linked polyacrylic acid is preferably present as an active material stabilizer in the negative electrode mixture 7 in a proportion of 0.05% or more and 1% or less. This is also because when the proportion of the non-cross-linked polyacrylic acid in the negative electrode mixture 7 is less than 0.05%, the resulting oxidation resistance of the negative electrode mixture 7 is so low that passivation of zinc is insufficiently inhibited, which significantly reduces the capacity retention of the battery. Further, such a proportion also results in an excessive amount of isolated electrolytes in the negative electrode mixture 7, thereby reducing leakage resistance. Further, when the proportion of the non-cross-linked polyacrylic acid in the negative electrode mixture 7 is more than 1%, the handleability of the negative electrode mixture 7 is significantly reduced due to the resulting spinnability.

The carboxymethylcellulose is preferably present as an active material stabilizer in the negative electrode mixture 7 in a proportion of 0.5% or more and 3% or less.

This is because when the proportion of the carboxymethylcellulose in the negative electrode mixture 7 is less than 0.5%, the resulting viscosity of the negative electrode mixture 7 is too low to allow easy handling. Moreover, when the proportion of the carboxymethylcellulose in the negative electrode mixture 7 is more than 3%, the resulting viscosity of the negative electrode mixture 7 is then too high, and filling and the like becomes difficult.

Next, examples were performed using, in the negative electrode mixture 7, active material stabilizers of different kinds at different proportions to examine the effects of the invention.

### (Example 1)

Based on the battery structure shown in Fig. 1, a negative electrode can 3 was obtained by press-molding a 0.15-mm-thick, three-layer clad material comprising a nickel outer surface layer, a metal layer of stainless steel (SUS), and a collector layer of copper. A positive electrode mixture 5 was obtained by mixing, in a blender, graphite in a proportion of 3 mass% as an electric conductor, nickel oxyhydroxide having an average particle diameter of 10 µm in a proportion of 92.8 mass%, sodium polyacrylate in a proportion of 0.2 mass% as a binder, 37% aqueous potassium hydroxide solution in a proportion of 2 mass% as an electrolyte, and aluminum hydroxide powder in a proportion of 1 mass% and calcium hydroxide powder in a proportion of 1 mass% as thermal decomposition inhibitors for nickel oxyhydroxide, and then molding the mixture into a pellet using a tableting machine.

Next, the positive electrode mixture 5 is placed into a positive electrode can 2, and an alkaline electrolyte containing potassium hydroxide is poured therein, so as to impregnate the positive electrode mixture 5 with the alkaline electrolyte.

On this positive electrode mixture 5, a two-layer separator 6 comprising a microporous membrane 6a and a nonwoven fabric 6b punched into a circular shape is placed. An alkaline electrolyte containing a 25% aqueous potassium hydroxide solution was applied dropwise onto the separator 6 for impregnation.

On the separator 6 is placed a gel negative electrode mixture 7 consisting of zinc alloy powder in a proportion of 63 mass%; zinc oxide in a proportion of 2.55 mass%; highly cross-linked sodium polyacrylate (PAS) in a proportion of 1.3 mass%, non-cross-linked sodium polyacrylate (PAS) in a proportion of 0.2 mass%, and carboxymethylcellulose (CMC) in a proportion of 1.5 mass% as active material stabilizers; and 45% aqueous potassium hydroxide solution in a proportion of 31.45 mass% as an electrolyte.

The negative electrode can 3 and the positive electrode can 2 were caulked and thus hermetically sealed, thereby giving a flat alkaline primary battery 1. Between the positive electrode can 2 and the negative electrode can 3, a gasket 4 is interposed to increase the sealing performance.

### (Example 2)

The structure in Example 2 is the same as in Example 1, except that the negative electrode mixture 7 contains, as active material stabilizers, highly cross-linked sodium polyacrylate (PAS) in a proportion changed from 1.3 mass% to 0.05 mass%, non-cross-linked sodium polyacrylate (PAS) in a proportion unchanged at 0.2 mass%, and carboxymethylcellulose (CMC) in a proportion unchanged at 1.5 mass%; and, as an electrolyte, 45% aqueous potassium hydroxide solution in a proportion changed from 31.45 mass% to 32.7 mass%.

### (Example 3)

The structure in Example 3 is the same as in Example 1, except that the negative electrode mixture 7 contains zinc alloy powder in a proportion changed from 63 mass% to 61.3 mass%; and, as active material stabilizers, highly cross-linked sodium polyacrylate (PAS) in a proportion changed from 1.3 mass% to 3.0 mass%, non-cross-linked sodium polyacrylate (PAS) in a proportion unchanged at 0.2 mass%, and carboxymethylcellulose (CMC) in a proportion unchanged at 1.5 mass%.

### (Example 4)

The structure in Example 4 is the same as in Example 1, except that the negative electrode mixture 7 contains, as active material stabilizers, highly cross-linked sodium polyacrylate (PAS) in a proportion unchanged at 1.3 mass%, non-cross-linked sodium polyacrylate (PAS) in a proportion changed from 0.2 mass% to 0.05 mass%, and carboxymethylcellulose (CMC) in a proportion unchanged at 1.5 mass%; and, as an electrolyte, 45% aqueous potassium hydroxide solution in a proportion changed from 31.45 mass% to 31.6 mass%.

### (Example 5)

The structure in Example 5 is the same as in Example 1, except that the negative electrode mixture 7 contains zinc alloy powder in a proportion changed from 63 mass% to 62.2 mass%; and, as active material stabilizers, highly cross-linked sodium polyacrylate (PAS) in a proportion unchanged at 1.3 mass%, non-cross-linked sodium polyacrylate (PAS) in a proportion changed from 0.2 mass% to 1.0 mass%, and carboxymethylcellulose (CMC) in a proportion unchanged at 1.5 mass%.

### (Example 6)

The structure in Example 6 is the same as in Example 1, except that the negative electrode mixture 7 contains, as active material stabilizers, highly cross-linked sodium polyacrylate (PAS) in a proportion unchanged at 1.3 mass%, non-cross-linked sodium polyacrylate (PAS) in a proportion unchanged at 0.2 mass%, and carboxymethylcellulose (CMC) in a proportion changed from 1.5 mass% to 0.5 mass%; and, as an electrolyte, 45% aqueous potassium hydroxide solution in a proportion changed from 31.45 mass% to 32.45 mass%.

### (Example 7)

The structure in Example 7 is the same as in Example 1, except that the negative electrode mixture 7 contains zinc alloy powder in a proportion changed from 63 mass% to 61.5 mass%; and, as active material stabilizers, highly cross-linked sodium polyacrylate (PAS) in a proportion unchanged at 1.3 mass%, non-cross-linked sodium polyacrylate (PAS) in a proportion unchanged at 0.2 mass%, and carboxymethylcellulose (CMC) in a proportion changed from 1.5 mass% to 3.0 mass%.

### (Comparative Example 1)

The structure in Comparative Example 1 is the same as in Example 1, except that the negative electrode mixture 7 contains, as active material stabilizers, highly cross-linked sodium polyacrylate (PAS) in a proportion changed from 1.3 mass% to 0.01 mass%, non-cross-linked sodium polyacrylate (PAS) in a proportion unchanged at 0.2 mass%, and carboxymethylcellulose (CMC) in a proportion unchanged at 1.5 mass%; and, as an electrolyte, 45% aqueous potassium hydroxide solution in a proportion changed from 31.45 mass% to 32.74 mass%.

### (Comparative Example 2)

The structure in Comparative Example 2 is the same as in Example 1, except that the negative electrode mixture 7 contains zinc alloy powder in a proportion changed from 63 mass% to 60.3 mass%; and, as active material stabilizers, highly cross-linked sodium polyacrylate (PAS) in a proportion changed from 1.3 mass% to 4.0 mass%, non-cross-linked sodium polyacrylate (PAS) in a proportion unchanged at 0.2 mass%, and carboxymethylcellulose (CMC) in a proportion unchanged at 1.5 mass%.

### (Comparative Example 3)

The structure in Comparative Example 3 is the same as in Example 1, except that the negative electrode mixture 7 contains, as active material stabilizers, highly cross-linked sodium polyacrylate (PAS) in a proportion unchanged at 1.3 mass%, non-cross-linked sodium polyacrylate (PAS) in a proportion changed from 0.2 mass% to 0.01 mass%, and carboxymethylcellulose (CMC) in a proportion unchanged at 1.5 mass%; and, as an electrolyte, 45% aqueous potassium hydroxide solution in a proportion changed from 31.45 mass% to 31.64 mass%.

### (Comparative Example 4)

The structure in Comparative Example 4 is the same as in Example 1, except that the negative electrode mixture 7 contains zinc alloy powder in a proportion changed from 63 mass% to 61.7 mass%; and, as active material stabilizers, highly cross-linked sodium polyacrylate (PAS) in a proportion unchanged at 1.3 mass%, non-cross-linked sodium polyacrylate (PAS) in a proportion changed from 0.2 mass% to 1.5 mass%, and carboxymethylcellulose (CMC) in a proportion unchanged at 1.5 mass%.

### (Comparative Example 5)

The structure in Comparative Example 5 is the same as in Example 1, except that the negative electrode mixture 7 contains, as active material stabilizers, highly cross-linked sodium polyacrylate (PAS) in a proportion unchanged at 1.3 mass%, non-cross-linked sodium polyacrylate (PAS) in a proportion unchanged at 0.2 mass%, and carboxymethylcellulose (CMC) in a proportion changed from 1.5 mass% to 0.3 mass%; and, as an electrolyte, 45% aqueous potassium hydroxide solution in a proportion changed from 31.45 mass% to 32.65 mass%.

### (Comparative Example 6)

The structure in Comparative Example 6 is the same as in Example 1, except that the negative electrode mixture 7 contains zinc alloy powder in a proportion changed from 63 mass% to 61.0 mass%; and, as active material stabilizers, highly cross-linked sodium polyacrylate (PAS) in a proportion unchanged at 1.3 mass%, non-cross-linked sodium polyacrylate (PAS) in a proportion unchanged at 0.2 mass%, and carboxymethylcellulose (CMC) in a proportion changed from 1.5 mass% to 3.5 mass%.

### (Comparative Example 7)

The structure in Comparative Example 7 is the same as in Example 1, except that the negative electrode mixture 7 contains zinc alloy powder in a proportion changed from 63 mass% to 62.5 mass%; and, as active material stabilizers, highly cross-linked sodium polyacrylate (PAS) in a proportion changed from 1.3 mass% to 3.5 mass%, non-cross-linked sodium polyacrylate (PAS) in a proportion changed from 0.2 mass% to 0.0 mass%, and carboxymethylcellulose (CMC) in a proportion changed from 1.5 mass% to 0.0 mass%.

### (Comparative Example 8)

The structure in Comparative Example 8 is the same as in Example 1, except that the negative electrode mixture 7 contains, as active material stabilizers, highly cross-linked sodium polyacrylate (PAS) in a proportion changed from 1.3 mass% to 0.0 mass%, non-cross-linked sodium polyacrylate (PAS) in a proportion changed from 0.2 mass% to 1.5 mass%, and carboxymethylcellulose (CMC) in a proportion changed from 1.5 mass% to 0.0 mass%; and, as an electrolyte, 45% aqueous potassium hydroxide solution in a proportion changed from 31.45 mass% to 32.95 mass%.

### (Comparative Example 9)

The structure in Comparative Example 9 is the same as in Example 1, except that the negative electrode mixture 7 contains zinc alloy powder in a proportion changed from 63 mass% to 62.5 mass%; and, as active material stabilizers, highly cross-linked sodium polyacrylate (PAS) in a proportion changed from 1.3 mass% to 0.0 mass%, non-cross-linked sodium polyacrylate (PAS) in a proportion changed from 0.2 mass% to 0.0 mass%, and carboxymethylcellulose (CMC) in a proportion changed from 1.5 mass% to 3.5 mass%.

One hundred alkaline batteries were made for each of the above Examples 1 to 7 and Comparative Examples 1 to 9, and examined as follows.

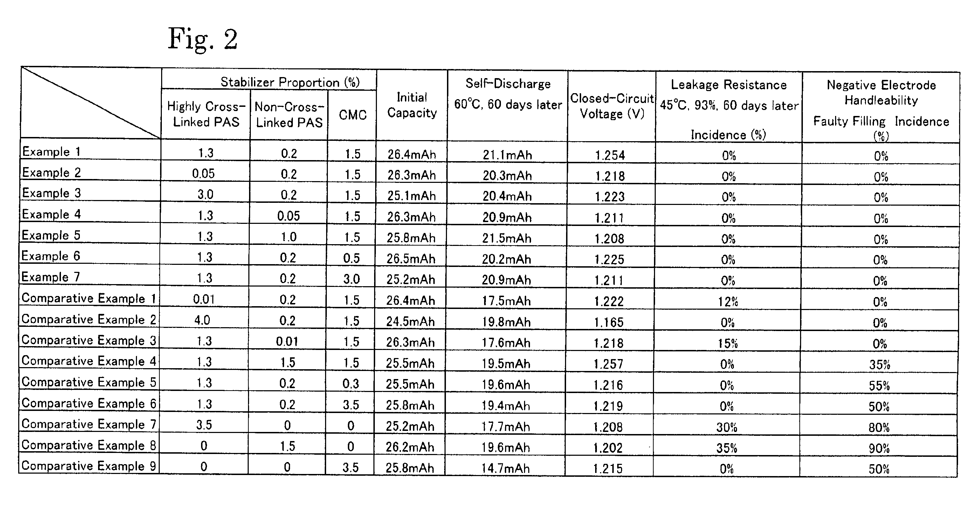

Specifically, twenty of the batteries were discharged at a constant resistance of 30 kΩ to a final voltage of 1.2 V. The thus-obtained discharge capacity [mAh] is shown in the table of Fig. 2.

Next, twenty of the batteries were stored in an environment where the temperature was 60°C and the humidity was low for 60 days, and then discharged at a constant resistance of 30 kΩ to a final voltage of 1.2 V. The thus-obtained discharge capacity [mAh] is shown in the table of Fig. 2.

Next, ten of the batteries were placed in an environment of -10°C at 80% DoD (depth of discharge) with a load resistance of 2 kΩ. The closed circuit voltage (discharge characteristics) [V] 7.8 m seconds later is shown in the table of Fig. 2.

Next, fifty of the batteries were stored in an environment where the temperature was 45°C and the relative humidity was 93% for 60 days. The resulting incidence of leakage is shown in the table of Fig. 2.

Finally, the table of Fig. 2 shows the incidence of faulty filling of a negative electrode mixture occurred in the production of the one hundred batteries of each example.
(1) First, Examples 1 to 7 and Comparative Examples 8 and 9 are compared from the table of Fig. 2. When the negative electrode mixture 7 at least contains a highly cross-linked polyacrylic acid as an active material stabilizer, a battery having excellent capacity retention and leakage resistance can be obtained, in which the negative electrode mixture 7 has excellent handleability.

This is because, first, when the negative electrode mixture 7 at least contains a highly cross-linked polyacrylic acid as an active material stabilizer, even if the battery 1 is stored at high temperatures, decomposition of stabilizers in the negative electrode mixture 7 due to the oxidation effect of nickel oxyhydroxide of the positive electrode is prevented, thereby inhibiting passivation of zinc or zinc alloy powder, which is a negative electrode active material, and preventing reduction in capacity retention.

Further, this is also because highly cross-linked polyacrylic acids have high electrolyte absorbency (electrolyte retention) and are capable of absorbing a large quantity of electrolyte, and accordingly the use thereof in a negative electrode mixture improves leakage resistance and negative electrode mixture handleability.
(2) Next, Examples 1 to 7 and Comparative Example 7 are compared from the table of Fig. 2. When the negative electrode mixture 7 at least contains a highly cross-linked polyacrylic acid, a non-cross-linked polyacrylic acid, and carboxymethylcellulose as active material stabilizers, a battery 1 having excellent capacity retention can be obtained, in which the negative electrode mixture 7 has excellent handleability.

This is because when the negative electrode mixture 7 at least contains a highly cross-linked polyacrylic acid, a non-cross-linked polyacrylic acid, and carboxymethylcellulose as active material stabilizers, the oxidation resistance of negative electrode active material stabilizers can be improved, and also the viscoelasticity of the negative electrode mixture 7 can be optimized.
(3) Next, Examples 1 to 3 and Comparative Examples 1 and 2 are compared from the table of Fig. 2. When a highly cross-linked polyacrylic acid is present as an active material stabilizer in the negative electrode mixture 7 in a proportion of 0.05% or more and 3% or less, a battery having excellent capacity, capacity retention, closed circuit voltage characteristics, and leakage resistance can be obtained.

This is because, first, when a highly cross-linked polyacrylic acid is present in the negative electrode mixture 7 in a proportion of 0.05% or more, the oxidation resistance of active material stabilizers of the negative electrode mixture 7 is improved, and passivation of zinc is inhibited, thereby preventing reduction in the capacity retention of the battery. At the same time, the amount of isolated electrolyte in the negative electrode mixture 7 is reduced, thereby preventing reduction in leak resistance.

Further, when a highly cross-linked polyacrylic acid is present in the negative electrode mixture 7 in a proportion of 3% or less, the necessary amount of electrolyte can be secured in the negative electrode mixture 7, while maintaining the oxidation resistance of active material stabilizers. As a result, a battery having excellent capacity and discharge characteristics can be obtained.
(4) Next, Examples 4 and 5 and Comparative Examples 3 and 4 are compared from the table of Fig. 2. When a non-cross-linked polyacrylic acid is present as an active material stabilizer in the negative electrode mixture 7 in a proportion of 0.05% or more and 1 % or less, a battery having excellent capacity retention and leakage resistance can be obtained, in which the negative electrode mixture has excellent handleability.

This is also because, first, when a non-cross-linked polyacrylic acid is present in the negative electrode mixture 7 in a proportion of 0.05% or more, the oxidation resistance of active material stabilizers of the negative electrode mixture 7 is improved, and passivation of zinc is inhibited, thereby preventing reduction in the capacity retention of the battery. At the same time, the amount of isolated electrolyte in the negative electrode mixture 7 is reduced, thereby preventing reduction in leak resistance.

Further, this is also because when a non-cross-linked polyacrylic acid is present in the negative electrode mixture 7 in a proportion of 1% or less, reduction in the handleability of the negative electrode mixture 7 due to the spinnability of the non-cross-linked polyacrylic acid can be prevented.
(5) Finally, Examples 6 and 7 and Comparative Examples 5 and 6 are compared from the table of Fig. 2. When carboxymethylcellulose (CMC) is present as an active material stabilizer in the negative electrode mixture 7 in a proportion of 0.5% or more and 3% or less, a battery having excellent handleability of the negative electrode mixture can be obtained.

This is because when carboxymethylcellulose (CMC) is present in the negative electrode mixture 7 in a proportion of 0.5% or more, an appropriate viscoelasticity of the negative electrode mixture 7 can be maintained. Further, this is also because when carboxymethylcellulose (CMC) is present in the negative electrode mixture 7 in a proportion of 3% or less, adverse effects due to the viscoelasticity of the negative electrode mixture 7 being too high, such as insufficient filling, etc., can be prevented.

Next, the advantages of the above embodiment are explained.
(1) In the flat alkaline primary battery 1 according to this embodiment, zinc or zinc alloy powder was used as a negative electrode active material, and nickel oxyhydroxide was used as a positive electrode active material. Because nickel oxyhydroxide, whose potential is higher than that of manganese dioxide or silver oxide, was used as a positive electrode active material, a battery voltage higher than that of an alkaline manganese battery or a silver oxide battery was achieved.

Further, a highly cross-linked polyacrylic acid is used as an active material stabilizer in the negative electrode mixture 7. Accordingly, even if the battery is stored at high temperatures, decomposition of stabilizers in the negative electrode mixture 7 due to the oxidation effect of nickel oxyhydroxide of the positive electrode is prevented, thereby inhibiting passivation of zinc or zinc alloy powder, which is a negative electrode active material, and achieving high capacity retention.

Further, a non-cross-linked polyacrylic acid and carboxymethylcellulose are used as active material stabilizers in the negative electrode mixture 7. Accordingly, the oxidation resistance of negative electrode active material stabilizers can be improved, and also the viscoelasticity of the negative electrode mixture 7 can be optimized. As a result, a battery having excellent capacity retention can be obtained, in which the negative electrode mixture has excellent handleability.

Therefore, the flat alkaline primary battery 1 is durable for long-lasting use in a device such as an electronic wristwatch, in which the final voltage is set relatively high to suit the battery voltage of a silver oxide battery.

As a result, the flat alkaline primary battery 1 of this embodiment does not use an expensive material (silver) like a silver oxide primary battery, and thus can be manufactured at low cost without being influenced by the noble metal market.
(2) In the flat alkaline primary battery 1 according to this embodiment, a highly cross-linked polyacrylic acid is present as an active material stabilizer in the negative electrode mixture 7 in a proportion of 0.05% or more and 3% or less. As a result, a battery having excellent capacity, capacity retention, closed circuit voltage characteristics, and leakage resistance can be obtained.
(3) In the flat alkaline primary battery 1 according to this embodiment, a non-cross-linked polyacrylic acid is present as an active material stabilizer in the negative electrode mixture 7 in a proportion of 0.05% or more and 1% or less. As a result, a battery having excellent capacity retention and leakage resistance can be obtained, in which the negative electrode mixture 7 has excellent handleability.
(4) In the flat alkaline primary battery 1 according to this embodiment, carboxymethylcellulose (CMC) is present as an active material stabilizer in the negative electrode mixture 7 in a proportion of 0.5% or more and 3% or less. As a result, a battery having excellent handleability of the negative electrode mixture can be obtained.

The foregoing description has been given by way of example only and it will be appreciated by a person skilled in the art that modifications can be made without departing from the scope of the present invention, which is defined by the claims.

## Claims

1. A flat alkaline primary battery (1) comprising:
a positive electrode comprising a positive electrode active material (5) containing nickel oxyhydroxide;
a negative electrode comprising a negative electrode active material (7) containing zinc or zinc alloy; and
an active material stabilizer in the negative electrode containing highly cross-linked polyacrylic acid, non-cross-linked polyacrylic acid, and carboxymethylcellulose.

2. A flat alkaline primary battery (1) according to claim 1, wherein the highly cross-linked polyacrylic acid is present in the negative electrode in a proportion of 0.05% or more and 3% or less.

3. A flat alkaline primary battery (1) according to claim 1 or claim 2, wherein the non-cross-linked polyacrylic acid is present in the negative electrode in a proportion of 0.05% or more and 1% or less.

4. A flat alkaline primary battery (1) according to any one of the preceding claims, wherein the carboxymethylcellulose is present in the negative electrode in a proportion of 0.5% or more and 3% or less.

## Patentansprüche

1. Flache, alkalische Primärbatterie (1), umfassend:
eine positive Elektrode, umfassend ein positives Elektrodenaktivmaterial (5), das Nickeloxyhydroxid enthält;
eine negative Elektrode, umfassend ein negatives Elektrodenaktivmaterial (7), das Zink oder eine Zinklegierung enthält; und
einen Aktivmaterialstabilisator in der negativen Elektrode, enthaltend hoch vernetzte Polyacrylsäure, unvernetzte Polyacrylsäure und Carboxymethylzellulose.

2. Flache, alkalische Primärbatterie (1) nach Anspruch 1, wobei die hoch vernetzte Polyacrylsäure in der negativen Elektrode in einem Anteil von 0,05% oder mehr und 3% oder weniger vorhanden ist.

3. Flache, alkalische Primärbatterie (1) nach Anspruch 1 oder Anspruch 2, wobei die unvernetzte Polyacrylsäure in der negativen Elektrode in einem Anteil von 0,05% oder mehr und 1% oder weniger vorhanden ist.

4. Flache, alkalische Primärbatterie (1) nach einem der vorangehenden Ansprüche, wobei die Carboxymethylzellulose in der negativen Elektrode in einem Anteil von 0,5% oder mehr und 3% oder weniger vorhanden ist.

## Revendications

1. Pile primaire alcaline plate (1) comprenant :
une électrode positive comprenant un matériau actit d'électrode positive (5) contenant de l'oxyhydroxide de nickel ;
une électrode négative comprenant un matériau actif d'électrode négative (7) contenant du zinc ou un alliage de zinc ; et
un stabilisateur de matériau actif dans l'électrode négative contenant de l'acide polyacrylique fortement réticulé, de l'acide polyacrylique non réticulé, et du carboxyméthylcellulose.

2. Pile primaire alcaline plate (1) selon la revendication 1, dans laquelle l'acide polyacrylique fortement réticulé est présent dans l'électrode négative dans une proportion de 0,05 % ou plus et 3% ou moins.

3. Pile primaire alcaline plate (1) selon la revendication 1 ou la revendication 2, dans laquelle l'acide polyacrylique fortement réticulé est présent dans l'électrode négative dans une proportion de 0,05 % ou plus et 1% ou moins.

4. Pile primaire alcaline plate (1) selon l'une quelconque des revendications précédentes, dans laquelle le carboxyméthylcellulose est présent dans l'électrode négative dans une proportion de 0,5 % ou plus et 3 % ou moins.
